Europäisches Patentamt

European Patent Office

Office européen des brevets

(11) Numéro de publication : **0 101 342 B1**

(12) **FASCICULE DE BREVET EUROPÉEN**

(45) Date de publication du fascicule du brevet :
10.09.86

(51) Int. Cl.⁴ : **F 02 P   5/04**

(21) Numéro de dépôt : **83401378.1**

(22) Date de dépôt : **05.07.83**

(54) Procédé d'optimisation de l'avance à l'allumage pour moteur à combustion interne.

(30) Priorité : 20.07.82 FR 8212628

(43) Date de publication de la demande :
22.02.84 Bulletin 84/08

(45) Mention de la délivrance du brevet :
10.09.86 Bulletin 86/37

(84) Etats contractants désignés :
BE DE FR GB IT NL SE

(56) Documents cités :
EP-A- 0 030 491
DE-A- 2 930 540
FR-A- 2 455 189
FR-A- 2 468 113
US-A- 4 233 944
US-A- 4 268 910
PATENTS ABSTRACTS OF JAPAN, vol. 6, no. 48 (M-119) (926), 27 mars 1982
PATENTS ABSTRACTS OF JAPAN, vol. 5, no. 76 (M-69) (748), 20 mai 1981

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Korb, Jean Pierre**
**65, rue de Paris**
**F-94340 Joinville le Pont (FR)**
Inventeur : **Lagrue, Jean Pierre**
**15, rue Gallieni**
**F-91120 Palaiseau (FR)**

0 101 342

## Description

La présente invention est relative à un procédé d'optimisation de l'avance à l'allumage pour moteur à combustion interne.

Le brevet US 4 268 910 décrit un procédé d'optimisation de l'avance à l'allumage d'un moteur à combustion interne équipé d'un calculateur contenant une loi programmée d'avance à l'allumage fonction du régime et de la charge du moteur et d'un système de détection de cliquetis fournissant une information représentative de la présence ou de l'absence de cliquetis à chaque cycle moteur, suivant lequel on détermine, en fonction du régime et de la charge du moteur, au moins deux zones de fonctionnement, à savoir une zone critique et une zone non critique et, en cas de détection de cliquetis dans la zone critique, on retarde l'avance à l'allumage engendrée à au moins l'un des cycles moteur suivants. Ce procédé permet d'éviter que la correction en fonction du cliquetis ait lieu quelque soit la charge et le régime du moteur. C'est ainsi que, par exemple si un coup de cliquetis apparaît et est corrigé en pleine charge (zone critique) et si la pleine charge est quittée avant le retour à la loi programmée, pour revenir en charge partielle (zone non critique), on n'effectue plus de correction et l'on reprend immédiatement la loi programmée d'avance à l'allumage correspondant à la fourniture du couple maximal du moteur pour le régime et la charge considérée.

Toutefois, ce procédé ne permet pas, dans la zone critique où le risque de cliquetis est le plus grand, d'éviter un retour trop rapide à l'avance programmée. Or si, dans certaines conditions de fonctionnement du moteur, cette avance programmée est voisine ou coïncide avec la limite de cliquetis, ce qui peut être le cas avec le vieillissement du moteur, on aura un nouveau coup de cliquetis chaque fois que l'angle d'avance reviendra à la loi initiale. Si ces coups de cliquetis sont trop nombreux, on risque alors l'endommagement du moteur.

Pour tenter d'apporter une solution à ce problème, le brevet US 4 233 944 décrit un procédé suivant lequel, après un coup de cliquetis, on retarde l'avance et l'on maintient ce retard d'autant plus longtemps que les conditions de fonctionnement du moteur sont plus stables. Par contre, on revient très vite à l'avance programmée dès que le moteur passe dans des conditions de fonctionnement transitoires. Toutefois, cette solution n'est pas non plus satisfaisante dans la mesure où la protection du moteur est mal assurée pendant les fonctionnements transitoires dont certains présentent des risques élevés de cliquetis.

L'invention vise à éliminer ces inconvénients et, à cet effet, elle a pour objet un procédé d'optimisation de l'avance à l'allumage d'un moteur à combustion interne équipé d'un calculateur contenant une loi programmée d'avance à l'allumage fonction du régime et de la charge du moteur et d'un système de détection de cliquetis fournissant une information représentative de la présence ou de l'absence de cliquetis à chaque cycle moteur, suivant lequel on détermine, en fonction du régime et de la charge du moteur, au moins deux zones de fonctionnement, à savoir une zone critique et une zone non critique et, en cas de détection de cliquetis dans la zone critique, on retarde l'avance à l'allumage engendrée à au moins l'un des cycles moteur suivants, caractérisé en ce qu'en réponse à la détection de cliquetis d'un cylindre dans la zone critique, on retarde l'avance à l'allumage du cylindre concerné de $n_1 + n_2$ degrés par rapport à la loi d'avance programmée et on commande le retour à l'avance programmée dudit cylindre suivant une boucle rapide et une boucle lente par décrémentation de $n_1$ à une vitesse élevée et de $n_2$ à une vitesse lente respectivement et en ce que, en présence d'une correction de boucle rapide et/ou de boucle lente lors d'un passage de la zone critique à la zone non critique, on annule la correction de boucle rapide, on mémorise l'état de boucle lente, et on suspend la correction d'avance et la décrémentation de $n_2$ suivant la boucle lente jusqu'au passage suivant de la zone non critique à la zone critique où l'on reprend la correction et la décrémentation de $n_2$ suivant la boucle lente. Grâce à ce procédé, dans la zone critique, on superpose à une correction classique à caractère fugace (boucle rapide) une deuxième correction (boucle lente) qui est interrompue lorsqu'on passe en zone non critique puis reprise si l'on revient ensuite en zone critique. On assure grâce à ce procédé un « apprentissage » du système d'allumage qui lui permet de s'adapter aux évolutions au cours du temps des caractéristiques de fonctionnement du moteur, sans pénaliser celui-ci dans la zone non critique où les risques de cliquetis sont faibles, tout en le protégeant et en conservant une avance voisine du couple maximal dans la zone à « risques » qu'est la zone critique.

De préférence, en réponse à la détection de cliquetis d'un cylindre dans la zone non critique, on retarde l'avance à l'allumage du cylindre concerné de $n_1$ degrés et on commande une diminution progressive de ce retard suivant la boucle rapide par décrémentation de $n_1$ à vitesse élevée. Cette correction suivant la boucle rapide dans la zone non critique est une sécurité contre les coups de cliquetis peu probables qui pourraient néanmoins apparaître dans cette zone.

Suivant une caractéristique, $n_1$ est de préférence compris entre 3 et 8 degrés et est décrémenté suivant la boucle rapide à raison de un degré tous les $m_1$ cycles moteurs, $m_1$ étant de préférence compris entre 12 et 25, et $n_2$ est de préférence égal à 1 et est décrémenté suivant la boucle lente à raison de un degré tous les $m_2$ cycles moteurs, $m_2$ étant de préférence compris entre 300 et 65 000 environ.

Ainsi, pour un coup de cliquetis détecté, on recule l'avance de $n_1$ degrés, 7 degrés par exemple, et on revient rapidement, en 12 secondes par exemple, à l'avance initiale moins $n_2$ degrés, puis à l'avance

2

initiale en un temps beaucoup plus long, de l'ordre de 10 à 20 minutes, fonction de la valeur $m_2$ choisie et du régime moteur. Une fois que le recul d'avance est suffisant pour que le moteur fonctionne à la limite du cliquetis, on n'aura plus qu'un coup de cliquetis toutes les 10 à 20 minutes, au lieu d'une fréquence beaucoup plus grande avec les procédés connus.

On sait d'autre part que la loi d'avance est programmée pour produire le couple maximal. Cependant, le phénomène de cliquetis peut apparaître pour certains cylindres avant le couple maximal. C'est pourquoi, dans le cas d'une loi d'avance commune à tous les cylindres, on est amené à aligner celle-ci sur le cylindre le plus sensible au cliquetis, au détriment des autres cylindres et donc du couple maximal fourni par le moteur. L'invention permet d'éviter cet inconvénient grâce au fait que, comme connu en soi, ladite loi d'avance programmée est commune à tous les cylindres du moteur, et en ce qu'on traite individuellement chaque cylindre en ce qui concerne la détection de cliquetis et la correction suivant lesdites boucles lente et/ou rapide de l'avance programmée. L'apprentissage se faisant cylindre par cylindre, on peut ainsi élaborer, si besoin est, une loi d'avance à l'allumage en s'alignant sur le cylindre le moins sensible au cliquetis. Dans une phase initiale, le système apprend pour chaque cylindre, à chaque coup de cliquetis, de combien de degrés il faut décaler l'avance pour éliminer le cliquetis. Chaque cylindre fonctionne donc à sa limite de cliquetis et le couple moteur est le meilleur que l'on puisse obtenir sans cliquetis. En outre, une telle adaptation tient compte des variations des limites de cliquetis en fonction du vieillissement du moteur.

Suivant une autre caractéristique, lors d'un passage de la zone non critique à la zone critique, on effectue une correction d'accélération cumulative avec les corrections des boucles lente et rapide en retardant l'avance à l'allumage de $n_3$ degrés pour tous les cylindres, $n_3$ étant de préférence compris entre 4 et 8, et on annule ce retard de $n_3$ degrés au bout de $m_3$ cycles moteurs, $m_3$ étant de préférence compris entre 12 et 25, et lors d'un passage de la zone critique à la zone non critique, on annule toute correction d'accélération en cours.

Suivant encore une autre caractéristique, comme connu en soi, le système de détection de cliquetis comporte un accéléromètre fixé rigidement sur la culasse du moteur, et on fait subir un traitement analogique au signal accélérométrique comportant, entre autres, l'intégration dudit signal à l'intérieur d'une fenêtre angulaire de dimension déterminée, on convertit le signal intégré sous forme numérique, et on compare, successivement pour chaque cylindre, la valeur accélérométrique intégrée et convertie sous forme numérique à un seuil de comparaison, le résultat de cette comparaison constituant ladite information.

D'autres caractéristiques et avantages de l'invention ressortiront de la description qui va suivre d'un mode de réalisation donné uniquement à titre d'exemple et illustré par les dessins annexés sur lesquels :

— la figure 1 représente, sous forme de schéma-bloc, un système de commande électronique d'avance à l'allumage incorporant le dispositif suivant l'invention ;

— les figures 2A et 2B forment ensemble un algorithme de fonctionnement du microcalculateur anti-cliquetis ; et

— la figure 3 est une courbe illustrant l'évolution de l'angle d'avance à l'allumage d'un cylindre en fonction du temps.

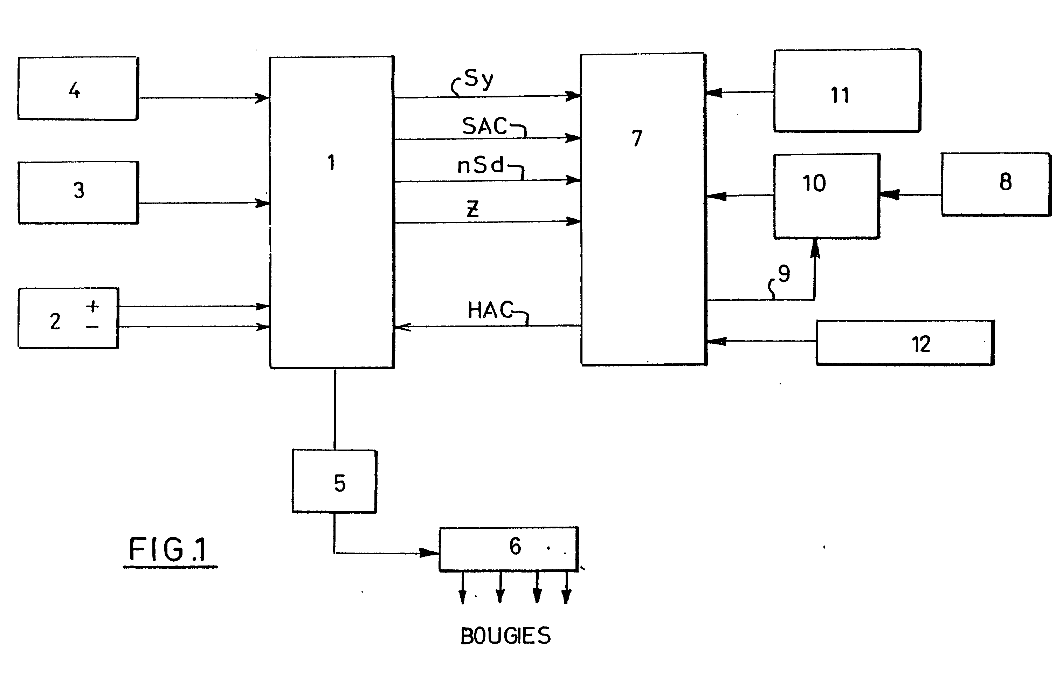

En se reportant à la figure 1, le système comprend un microcalculateur d'allumage 1 alimenté par une batterie d'accumulateurs 2 et qui élabore l'angle d'avance à l'allumage de chaque cylindre d'un moteur à combustion interne (non représenté) à partir d'une loi programmée dans le microcalculateur 1 et des informations qu'il reçoit d'un capteur de pression 3 fournissant une information représentative de la dépression dans le collecteur d'admission et d'un capteur de position 4 détectant le passage des dents dont est munie à sa périphérie une cible fixée sur le vilebrequin du moteur à combustion interne et tournant en synchronisme avec lui. Le microcalculateur 1 commande l'allumage du mélange air/combustible dans les différents cylindres du moteur par l'intermédiaire d'un circuit de puissance 5 comprenant une bobine d'allumage, et d'un distributeur 6. La manière dont le microcalculateur 1 élabore l'angle de mise en conduction de la bobine et l'angle d'avance à l'allumage a été décrite dans la demande de brevet européen EP 43 053 et ne sera donc pas reprise.

Le microcalculateur d'allumage 1 est associé à un microcalculateur anti-cliquetis 7 qui reçoit d'un capteur accélérométrique de cliquetis 8 un signal accélérométrique représentatif du bruit du moteur.

Le signal accélérométrique en provenance du capteur 8 est intégré pendant une fenêtre angulaire élaborée sur un conducteur 9 par le microcalculateur 7 et converti sous forme numérique dans un bloc 10, la valeur intégrée et convertie sous forme numérique du bruit dans la fenêtre de mesure étant adressée au microcalculateur 7. Un exemple détaillé de circuit permettant d'élaborer cette valeur intégrée et convertie sous forme numérique du bruit de moteur dans une fenêtre de mesure est donné dans la demande de brevet français 2 455 189 à laquelle on pourra se reporter.

Le microcalculateur 7 reçoit par ailleurs d'un bloc 11 des signaux lui permettant d'identifier chaque cylindre et, à cet effet, il peut être par exemple prévu des repères sur l'arbre à cames du moteur. Ainsi, comme cela sera expliqué plus en détails dans la suite de la description, lors de l'arrêt du moteur, les décalages de l'angle d'avance à l'allumage « appris » pour chaque cylindre par le microcalculateur 7 peuvent être stockés et conservés dans une mémoire grâce à une source d'alimentation électrique 12 indépendante du contacteur du véhicule. Lors de la remise en route du moteur, il n'y a alors plus apparition des coups de cliquetis qui se produisent en début d'« apprentissage ».

3

Le microcalculateur 7 reçoit enfin du microcalculateur 1 un signal de synchronisation Sy intervenant par exemple à chaque point mort haut d'un cylindre, un signal SAC autorisant le microcalculateur 7 à appliquer des impulsions HAC de correction en fonction du cliquetis au microcalculateur 1 et un signal nSd constitué d'impulsions intervenant à des fractions angulaires constantes de la rotation du vilebrequin. Les signaux Sy, SAC et HAC sont décrits dans la demande de brevet européen EP 43 053 tandis que le signal nSd, qui sert au microcalculateur 7 à élaborer la fenêtre de mesure, est décrit dans la demande de brevet européen EP 13 846. Enfin, le microcalculateur 1 applique au microcalculateur 7 un signal constitué d'un bit « 0 » ou « 1 » suivant que le moteur travaille dans une zone non critique ou une zone critique en fonction de la charge et du régime.

Ces deux zones peuvent être programmés dans le calculateur 1, soit dans une mémoire morte spécifique adressable en pression et régime, soit en utilisant l'un des deux chiffres binaires pour les conditions externes disponibles dans la mémoire morte 53 du calculateur décrit dans la demande de brevet européen EP 43 053.

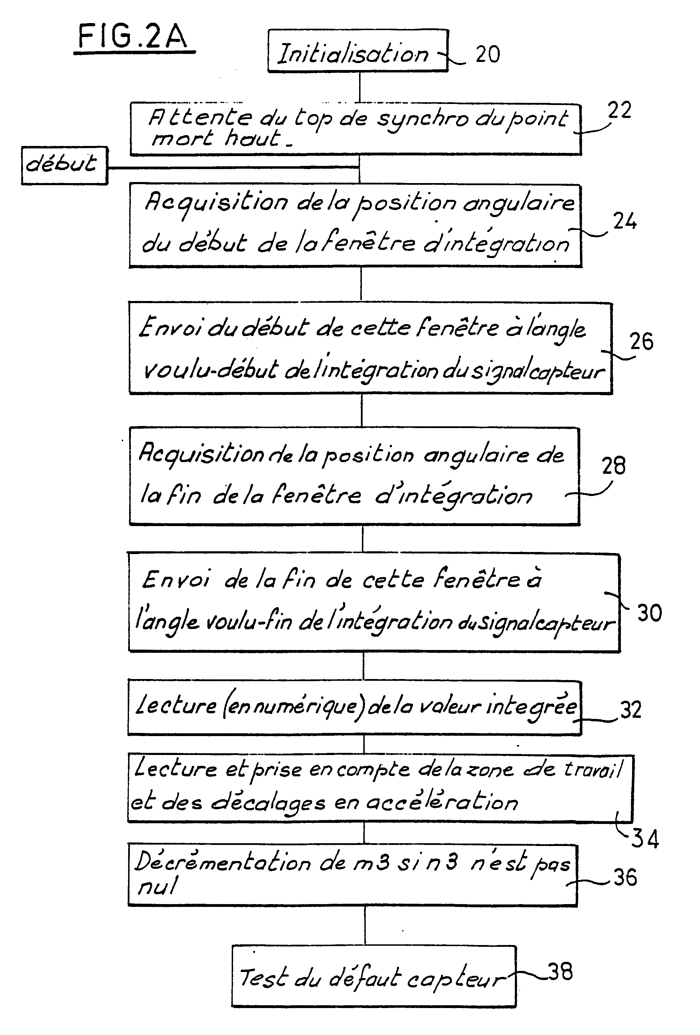

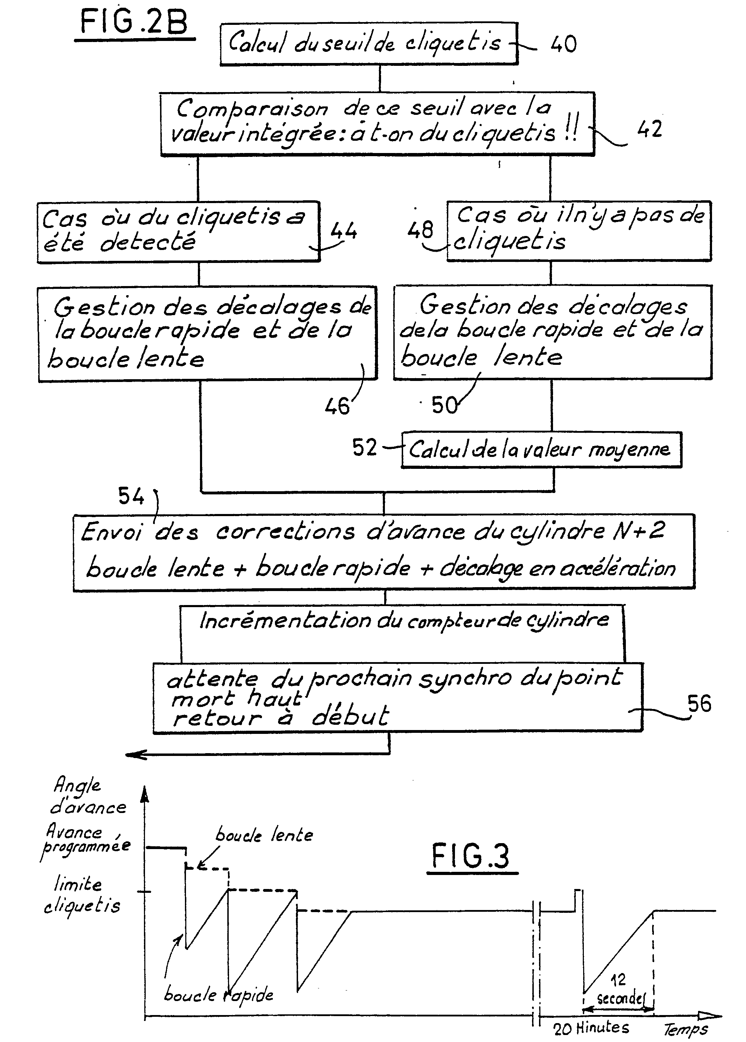

Le fonctionnement du dispositif anti-cliquetis associé au microcalculateur d'allumage 1 sera maintenant décrit en se référant à l'algorithme des figures 2A et 2B et à la courbe de la figure 3.

On précisera préalablement que le système de la figure 1 n'a pas uniquement une fonction de protection vis-à-vis du cliquetis, mais plus généralement une fonction de régulation permettant à chaque cylindre d'avoir un angle d'avance à l'allumage le plus près possible de sa propre limite de cliquetis, quand cela est nécessaire pour obtenir le meilleur couple moteur.

Pour ce faire, dans le microcalculateur 1 est mémorisée une courbe d'avance à l'allumage en fonction du régime et de la charge moteur, unique pour tous les cylindres et conçue de manière à obtenir le couple moteur optimal, sans tenir compte du cliquetis.

La stratégie de détection et de correction, cylindre par cylindre, mise en œuvre par le microcalculateur anti-cliquetis 7, apprend et mémorise pour chacun des cylindres le nombre de degrés à retrancher à la loi générale afin d'éviter le cliquetis dans chacun des cylindres.

Si, dans la zone critique, du cliquetis a été détecté dans un cylindre, l'avance à l'allumage de ce cylindre est retardée de $n_1$ degrés ($3 \leqslant n_1 \leqslant 8$) avec un retour rapide à l'avance précédente à raison de un degré tous les $m_1$ cycles moteurs ($12 \leqslant m_1 \leqslant 25$) et de $n_2$ degrés ($n_2 = 1$) avec un retour lent à l'avance précédente en $m_2$ cycles moteurs ($300 \leqslant m_2 \leqslant 65\,000$), ces deux reculs d'avance étant cumulatifs.

La boucle à retour rapide permet d'éliminer immédiatement le cliquetis, le décalage devant être suffisant pour s'affranchir d'une certaine rémanence du cliquetis.

La boucle à retour lent permet la mémorisation du nombre de coups de cliquetis dans le cylindre et de ce fait de décaler d'autant l'avance. Le retour à la loi initiale est nécessaire afin de se trouver le plus près possible de la limite de cliquetis en tenant compte des différents paramètres faisant évoluer cette limite de cliquetis (températures, charges, régimes...). Chaque cylindre a sa boucle rapide et sa boucle lente donc son angle d'avance le plus près possible de sa limite de cliquetis.

En outre, le passage de la zone non critique à la zone critique, c'est-à-dire le passage de « 0 » à « 1 » à l'entrée Z du microcalculateur d'anti-cliquetis 7, provoque la génération par ce dernier d'une correction en accélération se traduisant par un décalage de l'avance à l'allumage de $n_3$ degrés ($4 \leqslant n_3 \leqslant 8$) par rapport aux boucles à retour lent, sur tous les cylindres, pendant $m_3$ cycles moteurs ($12 \leqslant m_3 \leqslant 25$). Ceci permet d'introduire une garde au cliquetis en accélération. Pendant cette correction en accélération, les détections et les corrections des boucles à retour rapide et lent fonctionnent également.

En se référant à la figure 2A, le programme du microcalculateur anti-cliquetis 7 commence par une étape 20 d'initialisation déclenchée par l'apparition du signal, en provenance du bloc 11, identifiant le cylindre n° 1. Le microcalculateur 7 initialise alors un compteur de cylindres à 1.

A l'étape suivante 22, le microprocesseur anti-cliquetis 7 attend un front montant sur le signal Sy issu du microprocesseur d'allumage 1, ce front étant synchrone avec le point mort haut.

Lorsque ce front est reconnu, le programme débute.

— Acquisition de la position angulaire du début de la fenêtre d'intégration (étape 24) :

Le microprocesseur d'anti-cliquetis 7 va chercher dans sa mémoire morte une valeur correspondant au nombre de degrés volant désiré pour le début de la fenêtre d'intégration. Cette valeur est chargée dans un compteur interne du microprocesseur. Ce compteur est incrémenté à chaque front descendant du signal nSd, et le débordement du compteur est pris en compte par l'unité centrale du microprocesseur 7 comme le début de l'intégration.

— Début de l'intégration du signal capteur (étape 26) :

Au début de la fenêtre, l'unité centrale commande la voie analogique 10 pour que l'intégration du signal issu de l'accéléromètre 8 puisse se faire.

— Acquisition de la position angulaire de la fin de la fenêtre d'intégration (étape 28) :

Le procédé est rigoureusement identique à l'acquisition du début de la fenêtre.

— Fin de l'intégration du signal capteur (étape 30) :

A la fin de la fenêtre, l'unité centrale commande la voie analogique 10 pour que l'intégration du signal capteur s'arrête.

— Lecture de la valeur intégrée $x_n$ (étape 32) :

Cette lecture se fait en échantillonnant le convertisseur analogique/numérique 10. En variante, elle peut être réalisée par décharge à courant constant d'un condensateur, chargé auparavant avec une tension analogique proportionnelle au bruit dans la fenêtre. Le temps nécessaire pour la décharge est compté par l'horloge du microcalculateur, ce temps étant proportionnel à la valeur du bruit reçu par l'accéléromètre. La valeur intégrée et convertie sous forme numérique du signal accélérométrique dans une fenêtre n est désignée $x_n$.

— Lecture et prise en compte de la zone de travail (étape 34) :

L'information zone critique, correspondant à une certaine zone de fonctionnement du moteur en régime et en charge, est définie dans le microcalculateur 1 et lue sous forme d'un bit à l'entrée Z du microcalculateur anti-cliquetis 7. On est en zone critique quand le bit est à « 1 », en zone non critique si le bit est à « 0 ».

a) Si l'on est en zone non critique et qu'au point mort haut précédent on était également en zone non critique, on mémorise l'état zone non critique, on détecte un éventuel coup de cliquetis et on le corrige suivant la boucle rapide (retard de $n_1$ degrés et retour en $m_1$ cycles moteurs) ;

b) Si l'on est en zone non critique et qu'au point mort haut précédent on était dans la zone critique, on mémorise les boucles lentes, on met à zéro les boucles rapides et les corrections d'accélération, mais on ne fait plus le décalage d'avance de la boucle lente. Si l'on détecte un coup de cliquetis, on effectue une correction suivant la boucle rapide.

c) Si l'on est dans la zone critique et qu'au point mort haut précédent on était dans la zone non critique :

— on reprend en compte la ou les boucles lentes qui peuvent être cumulatives pour corriger l'avance et on reprend le comptage des cycles moteurs pour le retour à l'avance programmée ;

— on détecte et corrige le cliquetis éventuel par l'initialisation de nouvelles boucles lente et rapide ;

— on initialise une correction d'accélération, avec lecture en mémoire morte d'un angle $n_3$ et d'une durée de correction $m_3$, cette correction ajoutant un certain nombre de degrés (4) aux boucles lentes existantes.

d) Si l'on est dans la zone critique et qu'au point mort haut précédent on était dans la zone critique :

— On décrémente les boucles lentes et les boucles rapides, en nombre de cycles pour revenir à l'avance initiale, et en degrés.

— On détecte le cliquetis et réinitialise les boucles lentes et rapides en cas de cliquetis.

En outre, quelle que soit la zone, on calcule la valeur moyenne du bruit dans le cas où il n'y a pas de cliquetis.

— Décrémentation de $m_3$ (étape 36) :

Si l'on est dans la zone critique, on décrémente à chaque cycle le nombre $m_3$, si $n_3$ n'est pas nul. Si $m_3$ a été totalement décrémenté, la correction en accélération est annulée.

— Test de défaut capteur (étape 38) :

Si le bruit $x_n$ est inférieur à un certain seuil et a une valeur identique d'un cylindre à l'autre pendant un nombre donné de tours moteurs, c'est que le capteur est en panne. Dans ce cas, le microcalculateur 7 décale l'avance à l'allumage de tous les cylindres de $n_4$ degrés ($n_4 = 6$) par rapport à la loi générale pour se protéger contre les coups de cliquetis que l'on ne peut alors plus détecter.

— Calcul du seuil de cliquetis (étape 40) :

Ce seuil a pour valeur :

$$S = a\overline{x}_n + b \text{ où } \overline{x}_n$$

est la valeur moyenne du bruit pour le cylindre considéré, a et b sont des constantes :

$15 \leqslant a \leqslant 70$

$1,25 \leqslant b \leqslant 2,25$

Deux moyens de calcul de $\overline{x}_n$ peuvent être appliqués : il y a une moyenne différente pour chaque cylindre, calculée à chaque cycle moteur.

1) On choisit

$$\overline{x}_n = \overline{x}_{n-1} + \frac{1}{K}(x_n - \overline{x}_{n-1})$$

où :

$\overline{x}_n$ est la valeur moyenne du bruit après ce cycle,

$x_n$ est la valeur du bruit dans ce cycle,

K est une constante représentant une valeur de filtrage.

On a par exemple

$$K = 2 \text{ si } x_n > \overline{x}_{n-1} \text{ et } K = 4 \text{ si } x_n \leqslant \overline{x}_{n-1}$$

2). $$\text{Si } x_n < \overline{x}_{n-1} - \frac{x_{n-1}}{4},$$

on choisit

$$\bar{x}_n = \bar{x}_{n-1} - \Delta$$

où $\Delta$ est une valeur constante fixe, égale à 4, permettant de « suivre » les bruits moteur en descente en régime, donc en bruit.

$$\text{Si } \bar{x}_{n-1} > x_n \geqslant \bar{x}_{n-1} - \frac{\bar{x}_{n-1}}{4},$$

on choisit

$$\bar{x}_n = \bar{x}_{n-1}.$$

$$\text{Si } x_n \geqslant \bar{x}_{n-1}$$

On choisit

$$\bar{x}_n = \frac{x_n + \bar{x}_{n-1}}{2},$$

ce qui assure un suivi des bruits moteur en montée en bruit, avec un filtrage égal à 2.

Ce dernier procédé permet de suivre la valeur crête du bruit moteur et surtout de simplifier les calculs à l'intérieur du microcalculateur 7.

— Comparaison du seuil S avec la valeur intégrée (étape 42) :

$x_n$ étant la valeur intégrée représentative du bruit dans la fenêtre d'intégration,
si $x_n \geqslant S$, il y a cliquetis ;
si $x_n \leqslant S$, il n'y a pas cliquetis.

1) En cas de cliquetis (étapes 44 et 46), les opérations suivantes sont effectuées :
dans les zones critique et non critique :
— incrémentation de la boucle rapide de $n_1$ degrés pour le cylindre concerné, avec $3 \leqslant n_1 \leqslant 8$ ;
— chargement du nombre $m_1$ en mémoire pour le cylindre concerné, avec $12 \leqslant m_1 \leqslant 25$ tours moteur ;
dans la zone critique seule :
— incrémentation de la boucle lente de $n_2$ degrés pour le cylindre concerné, avec $n_2 = 1$ ;
— chargement du nombre $m_2$ en mémoire pour le cylindre concerné, avec $300 \leqslant m_2 \leqslant 65\,000$ tours moteur.
On ne calcule pas de nouvelle valeur moyenne :

$$\bar{x}_n = \bar{x}_{n-1}.$$

ceci afin de ne pas prendre en compte un bruit représentatif de cliquetis dans une moyenne représentative de bruit moteur.

2) Cas où il n'y a pas de cliquetis (étapes 48 à 52) :
On décrémente à chaque cycle se situant dans la zone critique les nombres $m_1$ et $m_2$ propres au cylindre concerné (si les nombres $n_1$ et $n_2$ ne sont pas nuls). Si $m_1$ ou $m_2$ ont été totalement décrémentés, on décrémente la boucle correspondante de 1 degré et on recharge la mémoire de vitesse à sa valeur maximale $m_1$ ou $m_2$ sauf si $n_1$ ou $n_2$ est nul.

La vitesse s'exprime en nombre de cycles moteur. On charge en mémoire une valeur représentative du nombre de cycles à effectuer avant de décrémenter la boucle de 1 degré. Le nombre de cycles restant à faire est décrémenté, chaque cycle.

On calcule ensuite une nouvelle valeur moyenne $\bar{x}_n$ suivant l'un des deux procédés décrits précédemment.

— Envoi des corrections (étape 54) :
On envoie au microcalculateur d'allumage 1 un nombre d'impulsions positives égal au nombre de degrés de décalage désiré, par rapport à la loi d'avance générale, pour le cylindre concerné. On a donc au maximum :

Angle de décalage = Angle de décalage boucle lente + Angle de décalage boucle rapide + Angle de décalage d'accélération.

— Incrémentation du compteur de cylindres (étape 56) :

On passe au cylindre suivant et on attend le prochain point mort haut.

, Bien entendu, de nombreuses modifications peuvent être apportées à l'invention sans sortir de son cadre. C'est ainsi que, si les limites de cliquetis sont voisines d'un cylindre à l'autre, on peut avoir une boucle lente commune à tous les cylindres et une boucle rapide propre à chaque cylindre.

De même, si les bruits d'un cylindre à l'autre sont très voisins, on peut avoir une valeur moyenne $\overline{x}_n$ et un seuil S commun à tous les cylindres.

Par ailleurs, dans le cas où l'on ne dispose pas d'un système 11 de repérage ou identification des cylindres, on peut mémoriser, lors de l'arrêt du moteur, seulement le décalage le plus faible des boucles lentes et l'appliquer ensuite, lors de la remise en route, à tous les cylindres. De ce fait, l'apprentissage se fait plus rapidement, c'est-à-dire avec moins de coups de cliquetis, que s'il avait fallu recommencer totalement l'apprentissage en partant de la loi générale d'avance à l'allumage commune à tous les cylindres programmée dans le microcalculateur d'allumage 1.

On notera enfin que l'on peut choisir, en fonction du régime et de la charge du moteur, plus de deux zones de fonctionnement, par exemple trois. On peut alors avoir une zone « non critique » dans laquelle on ne modifie jamais l'avance à l'allumage programmée dans le microcalculateur 1, et des zones « peu critique » et « très critique » dans lesquelles, en réponse à la détection de cliquetis, on retarde l'avance à l'allumage de valeurs différentes, par exemple deux fois plus faibles dans la zone « peu critique » que dans la zone « très critique ».

De plus, il est bien entendu que les valeurs numériques données dans la présente description ne l'ont été qu'à titre d'exemple et peuvent être modifiées en fonction des applications envisagées.

**Revendications**

1. Procédé d'optimisation de l'avance à l'allumage d'un moteur à combustion interne équipé d'un calculateur (1) contenant une loi programmée d'avance à l'allumage fonction du régime et de la charge du moteur et d'un système de détection de cliquetis (7-10) fournissant une information représentative de la présence ou de l'absence de cliquetis à chaque cycle moteur, suivant lequel on détermine, en fonction du régime et de la charge du moteur, au moins deux zones de fonctionnement, à savoir une zone critique et une zone non critique et, en cas de détection de cliquetis dans la zone critique, on retarde l'avance à l'allumage engendrée à au moins l'un des cycles moteur suivants, caractérisé en ce qu'en réponse à la détection de cliquetis d'un cylindre dans la zone critique, on retarde l'avance à l'allumage du cylindre concerné de $n_1 + n_2$ degrés par rapport à la loi d'avance programmée et on commande le retour à l'avance programmée dudit cylindre suivant une boucle rapide et une boucle lente par décrémentation de $n_1$ à une vitesse élevée et de $n_2$ à une vitesse lente respectivement et en ce que, en présence d'une correction de boucle rapide et/ou de boucle lente lors d'un passage de la zone critique à la zone non critique, on annule la correction de boucle rapide, on mémorise l'état de boucle lente, et on suspend la correction d'avance et la décrémentation de $n_2$ suivant la boucle lente jusqu'au passage suivant de la zone non critique à la zone critique où l'on reprend la correction et la décrémentation de $n_2$ suivant la boucle lente.

2. Procédé suivant la revendication 1, caractérisé en ce que en réponse à la détection de cliquetis d'un cylindre dans la zone non critque, on retarde l'avance à l'allumage du cylindre concerné de $n_1$ degrés et on commande une diminution progressive de ce retard suivant la boucle rapide par décrémentation de $n_1$ à vitesse élevée.

3. Procédé suivant l'une quelconque des revendications 1 et 2, caractérisé en ce que $n_1$ est de préférence compris entre 3 et 8 degrés et est décrémenté suivant la boucle rapide à raison de un degré tous les $m_1$ cycles moteurs, $m_1$ étant de préférence compris entre 12 et 25, et en ce que $n_2$ est de préférence égal à 1 et est décrémenté suivant la boucle lente à raison de un degré tous les $m_2$ cycles moteurs, $m_2$ étant de préférence compris entre 300 et 65 000 environ.

4. Procédé suivant l'une quelconque des revendications 1 à 3, caractérisé en ce que, comme connu en soi, ladite loi d'avance programmée est commune à tous les cylindres du moteur et en ce qu'on traite individuellement chaque cylindre en ce qui concerne la détection de cliquetis et la correction suivant lesdites boucles lente et/ou rapide de l'avance programmée.

5. Procédé suivant l'une quelconque des revendications 1 à 4, caractérisé en ce que, lors d'un passage de la zone non critique à la zone critique, on effectue une correction d'accélération cumulative avec les corrections des boucles lente et rapide en retardant l'avance à l'allumage de $n_3$ degrés pour tous les cylindres, $n_3$ étant de préférence compris entre 4 et 8, et on annule ce retard de $n_3$ degrés au bout de $m_3$ cycles moteurs, $m_3$ étant de préférence compris entre 12 et 25, et en ce que, lors d'un passage de la zone critique à la zone non critique, on annule toute correction d'accélération en cours.

6. Procédé suivant l'une quelconque des revendications 1 à 5, caractérisé en ce que, comme connu en soi, le système de détection de cliquetis comporte un accéléromètre fixé rigidement sur la culasse du moteur, et on fait subir un traitement analogique au signal accélérométrique comportant, entre autres, l'intégration dudit signal à l'intérieur d'une fenêtre angulaire de dimension déterminée, on convertit le signal intégré sous forme numérique, et on compare, successivement pour chaque cylindre, la valeur accélérométrique intégrée et convertie sous forme numérique à un seuil de comparaison, le résultat de

**0 101 342**

cette comparaison constituant ladite information.

7. Procédé suivant la revendication 6, caractérisé en ce que ledit seuil de comparaison du cylindre concerné est égal à

$$S = a\overline{x}_n + b$$

dans lequel a et b sont des constantes et $\overline{x}_n$ est la valeur moyenne de la valeur accélérométrique intégrée $x_n$ représentative du bruit du moteur pour un cylindre donné, $\overline{x}_n$ étant calculée pour chaque cylindre à chaque cycle en l'absence de détection de cliquetis.

8. Procédé suivant la revendication 7, caractérisé en ce que :

$$\overline{x}_n = \overline{x}_{n-1} + \frac{1}{K}(x_n - \overline{x}_{n-1})$$

où

— $x_n$ est la valeur accélérométrique intégrée dans la dernière fenêtre angulaire ;
— $\overline{x}_n$ est la valeur moyenne du bruit après cette dernière fenêtre angulaire ; et
— K est une constante de filtrage qui prend une première valeur si

$$\overline{x}_n > \overline{x}_{n-1}$$

et une deuxième valeur si

$$\text{Si } x_n \leqslant \overline{x}_{n-1}$$

9. Procédé suivant la revendication 7, caractérisé en ce que :
on donne à $\overline{x}_n$ la valeur

$$(\overline{x}_{n-1} - \Delta)$$

$$\text{Si } x_n < \overline{x}_{n-1} - \frac{x_{n-1}}{4},$$

$\Delta$ étant une valeur constante fixe,
on donne à $\overline{x}_n$ la valeur $\overline{x}_{n-1}$ si

$$\overline{x}_{n-1} > x_n \geqslant \overline{x}_{n-1} - \frac{\overline{x}_{n-1}}{4},$$

et on donne à $\overline{x}_n$ la valeur

$$\frac{x_n + \overline{x}_{n-1}}{2} \qquad \text{si } x_n \geqslant \overline{x}_{n-1}$$

10. Procédé suivant l'une quelconque des revendications 7 à 9, caractérisé en ce que si la valeur accélérométrique intégrée $x_n$ est inférieure à un seuil donné et reste identique d'un cylindre à l'autre pendant un nombre de cycles ou fenêtres angulaires prédéterminé, on retarde l'avance à l'allumage de ladite loi programmée d'un nombre $n_4$ de degrés pour tous les cylindres du moteur.

11. Procédé suivant l'une quelconque des revendications 1 à 10, caractérisé en ce que l'on détermine, en fonction du régime et de la charge du moteur, une troisième zone de fonctionnement dans laquelle on ne modifie jamais l'avance à l'allumage conforme à la loi programmée.

12. Procédé suivant l'une quelconque des revendications 1 à 11, caractérisé en ce que, en cas d'arrêt du moteur, on mémorise pour chaque cylindre la boucle lente et on reprend en compte ladite boucle lente mémorisée lors de la remise en route du moteur.

13. Procédé suivant l'une quelconque des revendications 1 à 11, caractérisé en ce que, en cas d'arrêt du moteur, on mémorise celle des boucles lentes de chaque cylindre qui correspond au décalage le plus faible et on reprend en compte, pour tous les cylindres, ladite boucle lente mémorisée lors de la remise en route du moteur.

**Claims**

1. A process for optimising the ignition advance of an internal combustion engine which is fitted with a computer (1) containing a programmed law in respect of ignition advance in dependence on the operating condition of and the load on the engine and a pinking detection system (7-10) for providing

8

information representative of the presence or absence of pinking in each engine cycle, comprising determining, in dependence on the operating condition of and the load on the engine, at least two operating zones, namely a critical zone and a non-critical zone and, in the event of detection of pinking in the critical zone, retarding the ignition advance produced in at least one of the following engine cycles, characterised in that in response to the detection of pinking in a cylinder in the critical zone, the ignition advance of the cylinder in question is retarded by $n_1 + n_2$ degrees with respect to the programmed advance law and the return to the programmed advance of said cylinder is controlled in a fast loop mode and a slow loop mode by decrementation of $n_1$ at a high speed and $n_2$ at a low speed respectively and that, in the presence of a fast loop mode and/or a slow loop mode correction on passing from the critical zone to the non-critical zone, the fast loop mode correction is nullified, the slow loop mode state is memorised, and advance correction and decrementation of $n_2$ in the slow loop mode are suspended until the following transition from the non-critical zone to the critical zone when there is a resumption of correction and decrementation of $n_2$ in the slow loop mode.

2. A process according to claim 1 characterised in that, in response to the detection of pinking of a cylinder in the non-critical zone, the ignition advance of the cylinder in question is retarded by $n_1$ degrees and a progressive reduction in said retardation is effected in the fast loop mode by decrementing of $n_1$ at high speed.

3. A process according to either one of claims 1 and 2 characterised in that $n_1$ is preferably between 3 and 8 degrees and is decremented in the fast loop mode at a rate of one degree every $m_1$ engine cycles, $m_1$ preferably being between 12 and 25, and that $n_2$ is preferably equal to 1 and is decremented in the slow loop mode at a rate of one degree every $m_2$ engine cycles, $m_2$ preferably being between 300 and 65 000 approximately.

4. A process according to any one of claims 1 to 3 characterised in that, as is known per se, said programmed advance law is common to all the cylinders of the engine and that each cylinder is treated individually as regards the detection of pinking and correction of the programmed advance in said slow and/or fast loop modes.

5. A process according to any one of claims 1 to 4 characterised in that, on passing from the non-critical zone to the critical zone, cumulative acceleration correction is effected with the corrections of the slow and fast loops by retarding the ignition advance by $n_3$ degrees for all the cylinders, $n_3$ preferably being between 4 and 8, and said retard of $n_3$ degrees is nullified at the end of $m_3$ engine cycles, $m_3$ preferably being between 12 and 25, and that, on passing from the critical zone to the non-critical zone, any acceleration correction which is under way is nullified.

6. A process according to any one of claims 1 to 5 characterised in that, as is known per se, the pinking detection system comprises an accelerometer which is rigidly fixed to the cylinder head of the engine, and the accelerometric signal is subjected to an analog processing, comprising *inter alia* integration of said signal within an angular window of given dimension, the integrated circuit is converted to digital form, and the accelerometric value when integrated and converted to digital form is compared to a comparison threshold, successively for each cylinder, the result of said comparison operation constituting said information.

7. A process according to claim 6 characterised in that said comparison threshold of the cylinder in question is equal to

$$S = a\overline{x}_n + b$$

in which a and b are constants and $\overline{x}_n$ is the mean value of the integrated accelerometric value $x_n$ representative of the noise of the engine for a given cylinder, $\overline{x}_n$ being calculated for each cylinder in each cycle in the absence of detection of pinking.

8. A process according to claim 7 characterised in that :

$$\overline{x}_n = \overline{x}_{n-1} + \frac{1}{K}(x_n - \overline{x}_{n-1})$$

wherein

— $x_n$ is the integrated accelerometric value in the last angular window ;
— $\overline{x}_n$ is the mean value of the noise after said last angular window ;
and
— K is a filter constant which assumes a first value if

$$x_n > \overline{x}_{n-1}$$

and a second value if

$$x_n \leqslant \overline{x}_{n-1}$$

9. A process according to claim 7 characterised in that the value

$$( \overline{x}_{n-1} - \Delta )$$

is given to $\overline{x}_n$ if

$$x_n < \overline{x}_{n-1} - \frac{x_{n-1}}{4} ,$$

$\Delta$ being a fixed constant value, the value $\overline{x}_{n-1}$ is given to $\overline{x}_n$ if

$$\overline{x}_{n-1} > x_n \geqslant \overline{x}_{n-1} - \frac{\overline{x}_{n-1}}{4} ,$$

and the value

$$\frac{x_n + \overline{x}_{n-1}}{2}$$

is given to $\overline{x}_n$ if

$$x_n \geqslant \overline{x}_{n-1}$$

10. A process according to any one of claims 7 to 9 characterised in that, if the integrated accelerometric value $x_n$ is lower than a given threshold and remains identical from one cylinder to another during a predetermined number of cycles or angular windows, the ignition advance of said programmed law is retarded by a number $n_4$ of degrees for all the cylinder of the engine.

11. A process according to any one of claims 1 to 10 characterised by determining, in dependence on the operating condition of and load on the engine, a third operating zone in which the ignition advance in accordance with the programmed law is never modified.

12. A process according to any one of claims 1 to 11 characterised in that, in the event of the engine stopping, the slow loop is memorised for each cylinder, and said memorised slow loop is taken into account again when the engine is restarted.

13. A process according to any one of claims 1 to 11 characterised in that, in the event of the engine stopping, that one of the slow loops of each cylinder which corresponds to the smallest shift is memorised and said memorised slow loop is taken into account again, for all the cylinders, when the engine is restarted.

**Patentansprüche**

1. Optimierungsverfahren des Zündzeitpunktes einer Brennkraftmaschine, die einen Rechner (1) aufweist, der ein Programm für die Vorzündung als Funktionen des Betriebszustandes und der Belastung des Motors enthält und die eine Klopf-Detektoranordnung (7-10) enthält, die ein Signal abgibt, das das Auftreten oder Fehlen von Klopfen bei jedem Motorzyklus anzeigt und wobei, als Funktion des Betriebszustandes und der Belastung des Motors, wenigstens zwei Funktionsbereiche bestimmt werden, und zwar ein kritischer und ein nichtkritischer Bereich, wobei im Falle des Feststellens von Klopfen im kritischen Bereich der eingestellte Zündzeitpunkt verzögert wird während wenigstens eines der nachfolgenden Motorzyklen, dadurch gekennzeichnet, daß als Folge des in einem Zylinder im kritischen Bereich festgestellten Klopfens die Vorzündung dieses Zylinders um $n_1 + n_2$ bezüglich der programmierten Zündzeitpunktverstellung verzögert wird und die Rückkehr zum programmierten Zündzeitpunkt dieses Zylinders gesteuert wird entsprechend einer schnellen und einer langsamen Regelschleife mittels Abnahme von $n_1$ mit hoher Geschwindigkeit und von $n_2$ mit langsamer Geschwindigkeit, und daß bei Vorhandensein einer Korrektur der schnellen und/oder langsamen Regelschleife während des Überganges von dem kritischen Bereich zum nichtkritischen Bereich die Korrektur der schnellen Regelschleife annuliert wird, der Zustand der langsamen Regelschleife gespeichert wird und die Zündzeitpunktkorrektur und die Verringerung von $n_2$ während der langsamen Regelschleife unterbrochen wird bis zum nächsten Übergang vom nichtkritischen Bereich zum kritischen Bereich, wo die Korrektur und die Verringerung von $n_2$ während der langsamen Regelschleife erneut erfolgen.

2. Verfahren nach Anspruch 1, dadurch gekennzeichnet, daß als Folge des Feststellens von Klopfen in einem Zylinder im nichtkritischen Bereich die Vorzündung dieses Zylinders um $n_1$ Grad verzögert wird und daß eine steigende Abnahme dieser Verzögerung gesteuert wird gemäß der schnellen Regelschleife durch Veringerung von $n_1$ mit erhöhter Geschwindigkeit.

3. Verfahren nach einem der Ansprüche 1 und 2, dadurch gekennzeichnet, daß $n_1$ vorzugsweise zwischen 3 und 8° liegt und gemäß der schnellen Regelschleife verringert wird um 1° alle $m_1$ Motorzyklen, wobei $m_1$ vorzugsweise zwischen 12 und 25 liegt und daß $n_2$ vorzugsweise gleich 1 ist und gemäß der langsamen Regelschleife um 1° verringert wird alle $m_2$ Motorzyklen, wobei $m_2$ vorzugsweise zwischen 300 und ungefähr 65 000 liegt.

4. Verfahren nach einem der Ansprüche 1 bis 3, dadurch gekennzeichnet, daß in an sich bekannter Weise das Zündzeitpunktprogramm allen Zylindern des Motors gemeinsam ist und daß jeder Zylinder einzeln behandelt wird hinsichtlich des Feststellens von Klopfen und der Korrektur gemäß den langsamen und/oder schnellen Regelschleifen der programmierten Vorzündung.

5. Verfahren nach einem der Ansprüche 1 bis 4, dadurch gekennzeichnet, daß während des Übergangs von dem nichtkritischen Bereich zum kritischen Bereich eine Korrektur durchgeführt wird, der kumulierten Beschleunigung mit den Korrekturen der langsamen und schnellen Regelschleifen, indem die Vorzündung um $n_3$ Grad für alle Zylinder verringert wird, wobei $n_3$ vorzugsweise zwischen 4 und 8 liegt und wobei diese Verringerung um $n_3$ Grad am Ende von $m_3$ Motorzyklen annuliert wird, wobei $m_3$ vorzugsweise zwischen 12 und 25 liegt und daß während des Übergangs vom kritischen Bereich zum nichtkritischen Bereich alle laufenden Beschleunigungskorrekturen annuliert werden.

6. Verfahren nach einem der Ansprüche 1 bis 5, dadurch gekennzeichnet, daß in an sich bekannter Weise die Klopffeststellanordnung einen fest am Zylinderkopf angeordneten Beschleunigungsmesser aufweist und daß das Beschleunigungssignal analog verarbeitet wird unter anderem mittels Integration des Signals im Inneren eines analogen Fensters vorgegebener Abmessungen, Umwandlung des integrierten Signals in numerische Form und aufeinanderfolgendes Vergleichen für jeden Zylinder des integrierten und in numerische Form umgewandelten Beschleunigungssignals mit einer Vergleichsschwelle, wobei das Ergebnis dieses Vergleichs das gewünschte Signal darstellt.

7. Verfahren nach Anspruch 6, dadurch gekennzeichnet, daß die Vergleichsschwelle des betrachteten Zylinders gleich

$$S = a\bar{x}_n + b$$

ist, wobei a und b Konstante sind und $\bar{x}_n$ der Mittelwert des integrierten Beschleunigungswerts $x_n$ ist und das Motorgeräusch für einen gegebene Zylinder darstellt, wobei $\bar{x}_n$ für jeden Zylinder bei jedem Zyklus und fehlendem Klopfen berechnet wird.

8. Verfahren nach Anspruch 7, dadurch gekennzeichnet, daß

$$\bar{x}_n = \bar{x}_{n-1} + \frac{1}{K}\cdot(x_n - \bar{x}_{n-1})$$

ist,

wobei

— $x_n$ der integrierte Beschleunigungswert im letzten Winkelfenster ist,

— $\bar{x}_n$ der Geräuschmittelwert nach diesem letzten Winkelfenster ist und

— K eine Filterkonstante ist, die einen ersten Wert annimmt, wenn

$$x_n > \bar{x}_{n-1}$$

und einen zweiten Wert annimmt,
wenn

$$x_n \leqslant \bar{x}_{n-1}$$

9. Verfahren nach Anspruch 7, dadurch gekennzeichnet, daß $X_n$ den folgenden Wert annimmt

$$(\bar{x}_{n-1} - \Delta)$$

wenn

$$x_n < \bar{x}_{n-1} - \frac{x_{n-1}}{4} ,$$

wobei $\Delta$ eine feste Konstante ist, daß $\bar{x}_n$ den Wert $\bar{x}_{n-1}$ annimmt, wenn

$$\bar{x}_{n-1} > x_n \geqslant \bar{x}_{n-1} - \frac{x_{n-1}}{4} ,$$

und daß $\bar{x}_n$ den Wert

$$\frac{x_n + \bar{x}_{n-1}}{2}$$

annimmt, wenn

$$x_n \geqslant \overline{x}_{n-1}$$

ist.

10. Verfahren nach einem der Ansprüche 7 bis 9, dadurch gekennzeichnet, daß, wenn der integrierte Beschleunigungswert $x_n$ kleiner als eine gegebene Schwelle ist und für verschiedene Zylinder indentisch ist während einer Anzahl von Zyklen oder vorgegebenen Winkelfenstern der programmierte Zündzeitpunkt um $n_4$ Grad für alle Motorzylinder verringert wird.

11. Verfahren nach einem der Ansprüche 1 bis 10, dadurch gekennzeichnet, daß als Funktion des Betriebszustandes und der Belastung des Motors ein dritter Funktionsbereich festgelegt wird, in dem der programmierte Zündzeitpunkt niemals verändert wird.

12. Verfahren nach einem der Ansprüche 1 bis 11, dadurch gekennzeichnet, daß im Falle des Motorhalts für jeden Zylinder die langsame Regelschleife gespeichert wird und diese gespeicherte langsame Regelschleife während des erneuten Startens des Motors wieder verwendet wird.

13. Verfahren nach einem der Ansprüche 1 bis 11, dadurch gekennzeichnet, daß im Falle des Motorhalts diejenige der langsamen Regelschleifen eines jeden Zylinders gespeichert wird, die der geringsten Verzögerung entspricht und daß während des erneuten Startens des Motors diese gespeicherte Regelschleife für alle Zylinder wieder verwendet wird.

FIG.1

BOUGIES

0 101 342

## FIG.2A

Initialisation — 20

Attente du top de synchro du point mort haut. — 22

début

Acquisition de la position angulaire du début de la fenêtre d'intégration — 24

Envoi du début de cette fenêtre à l'angle voulu-début de l'intégration du signal capteur — 26

Acquisition de la position angulaire de la fin de la fenêtre d'intégration — 28

Envoi de la fin de cette fenêtre à l'angle voulu-fin de l'intégration du signal capteur — 30

Lecture (en numérique) de la valeur integrée — 32

Lecture et prise en compte de la zone de travail et des décalages en accélération — 34

Décrémentation de m3 si n3 n'est pas nul — 36

Test du défaut capteur — 38

# FIG.2B

Calcul du seuil de cliquetis — 40

Comparaison de ce seuil avec la valeur intégrée: à t-on du cliquetis !! — 42

Cas où du cliquetis a été detecté — 44

48 — Cas où il n'y a pas de cliquetis

Gestion des décalages de la boucle rapide et de la boucle lente — 46

Gestion des décalages de la boucle rapide et de la boucle lente — 50

52 — Calcul de la valeur moyenne

54 — Envoi des corrections d'avance du cylindre N+2 boucle lente + boucle rapide + décalage en accélération

Incrémentation du compteur de cylindre

attente du prochain synchro du point mort haut retour à début — 56

Angle d'avance

Avance programmée

boucle lente

limite cliquetis

boucle rapide

# FIG.3

12 secondes

20 Minutes    Temps